# EUROPÄISCHE PATENTSCHRIFT

(11) **EP 0 544 873 B1**
(45) Veröffentlichungstag und Bekanntmachung des Hinweises auf die Patenterteilung: **31.05.1995**
(21) Anmeldenummer: 92912781.9
(22) Anmeldetag: 01.07.1992
(51) Int. Cl.: B62K 21/26

(54) **GRIFFSTÜCK FÜR LENKSTANGEN**
HANDLEBAR GRIP
POIGNEE DE GUIDON

(30) Priorität: 01.07.1991 DE 4121715
(43) Veröffentlichungstag der Anmeldung: 09.06.1993
(73) Patentinhaber: HARTMANN, Werner, D-87740 Buxheim (DE); HARTMANN, Alfred, D-87730 Grönenbach (DE)
(72) Erfinder: HARTMANN, Werner, D-87740 Buxheim (DE); HARTMANN, Alfred, D-87730 Grönenbach (DE)
(74) Vertreter: von Bülow, Tam, Dr.
(86) Internationale Anmeldenummer: DE9200544
(87) Internationale Veröffentlichungsnummer: WO9301081

(56) Entgegenhaltungen:
- EP-A- 0 423 422
- FR-A- 395 179
- US-A- 4 308 762

## Beschreibung

Die Erfindung betrifft ein Griffstück für Lenkstangen, insbesondere von Fahrrädern, mit einer Bohrung zum Aufschieben des Griffstücks auf die Lenkstange und einem zur Längsachse der Bohrung exzentrischen Bereich, der zumindest in einem Teilabschnitt seiner Längserstreckung in seiner Exzentrizität zum Ende der Lenkstange hin zunimmt, wobei die Außenquerschnittskonturen des Griffstückes in diesem Teilabschnitt einen stetigen Verlauf haben (FR-PS 870 862).

Griffstücke für Lenkstangen sind seit langem in verschiedensten Ausführungsformen für unterschiedliche Lenker bekannt. So gibt es auf dem Markt hauptsächlich Griffstücke, die völlig konzentrisch zu ihrer Bohrung geformt sind und die für Lenkerformen aller Art verwendet werden. Rennlenker werden als Griffstückersatz oft einfach mit einem griffigen Band umwickelt. Gerade Lenkstangen - vor allem für Mountainbikes (Bergfahrräder) und Treckingräder - werden z.B. mit einem Griffstück aus relativ weichem Schaumstoff versehen, das Stöße abfedert.

Diese Federeigenschaft ist ein Nebeneffekt des Versuches, mit Hilfe eines weichen Schaumstoffgriffes den bei geraden Lenkstangen besonders ungünstigen Griffwinkel zu verbessern. Der Griffwinkel (bzw. der Drehwinkel des Handgelenkes) ist der Winkel zwischen der Längsachse des Unterarmes und dem zwischen Handballen und Fingern umfaßten Griffstück. Eine optimale Ausrichtung des Handgelenkes beim Radfahren liegt vor, wenn das Handgelenk gegenüber der Längsachse des Unterarmes nicht abgeknickt ist. Diese Orientierung des Handgelenkes zum Unterarm wird nachfolgend als "neutrale" Stellung bezeichnet. Sie entspricht i.A. einem Griffwinkel zwischen 60° und 67°. Bei geraden Lenkstangen kann diese Bedingung natürlich nicht erfüllt sein, so daß eine Fehlstellung des Handgelenkes vorliegt. Ein weiches Griffstück erlaubt zwar einen etwas geänderten Griffwinkel gegen den Lenker, besitzt jedoch den Nachteil, daß sich die Handwinkelstellung laufend ändert und das Handgelenk daher zu schnell ermüdet.

Das Abknicken des Handgelenkes gegenüber der Längsachse des Unterarmes erhöht außerdem die Beanspruchung des Gelenkes. Bei bestimmten Lagen können sogar an der Außenseite der Hand verlaufende Nerven schmerzhaft eingeklemmt werden.

Bei vielen im Handel erhältlichen Fahrradlenkern sind die Griffenden zwar gegenüber der Lenker-Längsachse um 10° abgewinkelt, sie verursachen damit jedoch noch immer eine Fehlstellung der Handgelenke. Selbst Lenkstangen, deren Griffenden so stark umgeknickt sind (um z.B. 25°), daß der zwischen Handballen und Fingern umfaßte Griff gegenüber der Längsachse des Unterarmes einen Winkel zwischen 60° und 67° besitzt, stellen keine optimale Lösung dar. Sie ermöglichen nicht die erforderliche Feinabstimmung des Griffwinkels auf die Ergonomie des Fahrers, da jeder Radfahrer individuell unterschiedliche Handgriffstellungen als "bequem" empfindet. Durch die völlig verschiedenen Körperbreiten sind die Unterarme außerdem nicht immer parallel zu der Längsachse des Rades, sondern treffen individuell unterschiedlich bereits in verschiedenen Winkeln auf die Griffstücke. Weiterhin sind Lenker mit umgebogenen Enden dort nicht einsetzbar, wo - entweder aus ästhetisch modischen oder aus sportlichen Gründen-eine gerade Lenkerform ausdrücklich gewünscht ist.

Die Vielzahl an Ausführungsformen verdeutlicht die Schwierigkeit, einen Fahrradlenker zusammen mit dem Griffstück so zu gestalten, daß der Fahrer entspannt und sicher fahren kann, ohne daß das Handgelenk zu schnell ermüdet. Auch Spezialartikel - wie z.B. der sogenannte Triathlonlenker, auf den sich der Fahrer zum Entspannen der Handgelenke im Unterarmbereich abstützen kann - und die ständigen Änderungen der Lenkerformen beruhen im Grunde auf Mängeln der aus dem Stand der Technik bekannten Griffstücke.

So zeigt die DE-GM 18 05 994 einen Fahradgriff aus einer konusförmigen Hülse, in der eine elastische Gummischeibe mit einer unkonzentrischen Bohrung befestigt ist. Der Griff soll durch die Federeigenschaft des Gummiringes Stöße dämpfen und abfedern. Wenn der Fahrer den Griff belastet, wird der Gummiring so zusammengedrückt, daß die - im unbelasteten Zustand zur Mittelachse des Konus nicht konzentrische - Bohrung des Griffes und die Mittelachse des Konus annähernd zusammenfallen. Der Griff hat damit eine normal konische Form, die nicht individuell an den jeweiligen Fahrer anpaßbar ist. Darüber hinaus erscheint die starke Federeigenschaft zwar auf den ersten Blick komfortabel, da das Handgelenk statt "harten" Stößen "weicheren" Drehbewegungen ausgesetzt ist. Ständige Drehbewegungen bei Kräfteveränderungen ermüden jedoch das Handgelenk und verfälschen die z.B. beim Bergfahren (mit einem Mountainbike) gewünschte präzise Kraftübertragung auf das Vorderrad. Dieselben Nachteile hat der Griff der US 45 22 083. In dieser Schrift wird ein zudem speziell für Rennradlenker ausgelegter - in einer Stellung montierbarer - Fahradgriff gezeigt, der auf der Auflageseite des Handballens mit einer federnden Schicht versehen ist.

Die AT 1 55 648 und die DE-PS 6 88 541 zeigen Fahrradgriffe, deren Außenkontur einem Abdruck einer um eine Lenkstange gelegten Hand entspricht. Diese Griffe können nur in einer Handgelenkstellung umfaßt werden, da jeder Finger exakt in seiner speziell ausgeformten Mulde liegen muß. So ist es vor allem nicht möglich, das Handgelenk zur Entspannung relativ zum Unterarm etwas nach oben und unten zu drehen (sozusagen "senkrecht" zum Griffwinkel). Außerdem ist ebenfalls kein individuelles Anpassen des Griffwinkels möglich. Um wenigstens annähernd die Vielzahl unterschiedlicher Handgrößen abzudecken, müssen viele verschiedene Handgriffe oder sogar für jeden Fahrer ein nach dem eigenen Handabdruck gegossener Griff gefertigt werden.

Die US 31 79 435 zeigt ein in erster Linie für Skistöcke entwickeltes Griffstück aus einem elastischen Material. Das Griffstück besitzt damit elastische Federeigenschaften, die bei Radgriffen aus den oben bereits näher erläuterten Gründen nachteilig sind. Außerdem ist bei Skistöcken der "Griffwinkel" insofern belanglos, als der Skistock im Gegensatz zu einem Fahrradlenker völlig frei beweglich ist, so daß der Stock stets im "richtigen" Griffwinkel gehalten werden kann. Das Griffstück ist zwar leicht exzentrisch zu seiner Bohrung, diese leichte Exzentrität soll den Griff jedoch nur an die natürliche Krümmung der Innenhand beim Umfassen des Skistockes anpassen. Sie besitzt keinerlei Bezug zum Griffwinkel, der Griff ist nur in einer Position umfaßbar, was z.B. auch durch die feste Ausrichtung der Handgelenkschlaufen unterstrichen wird. Außerdem ist der leicht exzentrische Bereich von Bohrungen durchzogen, die beim Umgreifen federnd nachgeben, so daß der Griff beim Umgreifen seine leichte Exzentrität weitgehend verliert und sich der Handinnenfläche polsternd anpaßt.

In der DE G 83 22 411.4 wird ein für die Erfordernisse von Mopedfahrern ausgelegter Handgriff für Zweiradfahrzeuge gezeigt. Dieser Handgriff erlaubt es, die Lenkerbreite zu verändern und an die Körperbreite des Fahrers anzupassen, da die Bohrung des Handgriffes mittels einer Spannschraube in verschiedenen Positionen arretiert werden kann. Die Handgriffe sind drehfest montiert - so daß der Griffwinkel nicht individuell an den Fahrer anpaßbar ist - und weisen ein Griffstück auf, dessen Achse mit der Achse der Aufnahme des Handgriffes einen stumpfen - und-so mit z.B. zum Mountainbiking zu großen-Winkel einschließt. Ein großes Problem derartiger "aufwendiger" Griffe ist das Gewicht. Bei Krafträdern spielt das Griffgewicht keine Rolle. Bei sportlichen Fahrrädern ist die Gewichtsreduzierung jedoch ein wesentlicher Aspekt, so daß nur leichte Materialien verwendet werden können. Neuentwickelte Griffstücke müssen daher aus einem modernen Leichtkunststoff zu realisieren sein.

Aus der US 43 80 093 ist ein L-förmiger Handgriff bekannt, der im wesentlichen drei verschiedene Griffbereiche aufweist. Der Griff ist für Rennlenker konzipiert und kann auf dem Lenker nur in einer Stellung angebracht werden. Er besitzt federnd dämpfende Bereiche und soll die Fahrbequemlichkeit durch die verschiedenen Griffmöglichkeiten erhöhen. Der Griffwinkel ist jedoch ebenfalls nicht individuell auf den Fahrer einstellbar und außerdem nur bei Rennlenkern verwendbar.

Die FR 870 862 und die FR 8 67 659 zeigen ebenfalls federnde Griffstücke. Das Charakteristische der hier gezeigten Griffstücke ist die Federwirkung im exzentrischen Bereich. Diese Federwirkung - entweder durch mechanische Federn oder z.B. durch Gummi hervorgerufensoll Stöße dämpfen und mildern. Damit ist keine präzise Kraftübertragung auf den Lenker möglich. Die durch die Federwirkung verursachten ständigen Drehbewegungen - bzw. Griffwinkeländerungen - des Handgelenkes sind aus den vorstehend beschriebenen Gründen nachteilig. Das Griffstück erlaubt daher ebenfalls kein individuelles Einstellen des Griffwinkels. Da die Außenkontur im sich zum Ende der Lenkstange hin verbreiternden Teilabschnitt nicht wendepunktfrei ist, kann der Griffwinkel außerdem nicht kontinuierlich verstellt und der Griff nur in einer Drehstellung gut umfaßt werden. Ein kontinuierliches Verstellen des Griffwinkels entspricht auch nicht der Funktion des Griffstückes. Das Griffstück soll stets so zum Handgelenk gedreht werden, daß der Handballen durch den federnden, sich verbreiternden Abschnitt weich abgestützt ist. Wird das Griffstück belastet, verkleinert sich der - auch im unbelasteten Zustand schon relativ kleine - Winkel zwischen dem sich verbreiternden Bereich und der Lenkstange (und damit auch der Griffwinkel) und das Griffstück wird annnähernd konzentrisch zur Lenkstange. Das Griffstück besitzt zwar eine im unbelasteten Zustand zur Bohrung leicht exzentrische Form, diese Form resultiert jedoch aus dem Versuch, trotz der Federwirkung im belasteten Zustand eine zur Lenkstange nahezu konzentrische Form zu erreichen.

Aufgabe der Erfindung ist es, das gattungsbildende Griffstück für Lenkstangen so zu verbessern, daß ein individuelles Einstellen des Griffwinkels auf den Fahrer über einen kontinuierlichen Verstellbereich möglich ist.

Diese Aufgabe wird durch die im kennzeichenden Teil des Patentanspruches 1 angegebenen Merkmale gelöst.

Wird das Griffstück so gedreht, daß der exzentrische Bereich dem Unterarm gegenüberliegt und der nicht exzentrische Bereich zum Unterarm gewandt ist, wird der Griffwinkel allein durch die Form der Lenkstange bestimmt.

Bei einem geraden Lenker beträgt er somit ca. 80° bis 90°. Wird das Griffstück jetzt um den Lenker gedreht, wendet sich der exzentrische Bereich mehr und mehr zum Fahrer. Damit wird der Griffwinkel vergrößert, wenn die Hand (bzw. zumindest Daumen, Zeige- und Mittelfinger) das Griffstück in dem Teilabschnitt umfaßt, in dem sich der exzentrische Bereich zum Ende der Lenkstange hin verbreitert.

In diesem Teilabschnitt muß der exzentrische Bereich einen so großen Winkel α zur Lenkstange haben, daß durch Drehen des Griffstückes um die Längsachse der Bohrung ein genügender Einstellbereich vorhanden ist. Der Einstellbereich muß derart bemessen sein, daß das Handgelenk des Fahrers eine neutrale Stellung einnehmen kann. Die Größe des Winkels α wird durch die Lenkerform vorgegeben. Bei Lenkern mit bereits um 10° abgebogenen Enden braucht der Winkel α z.B. nur ca. 20° zu betragen , damit ein Griffwinkel zwischen 60° und 80° einstellbar ist. Bei einem geraden Lenker sollte der Winkel α zum Erreichen eines vergleichbaren Griffwinkelbereiches dagegen z.B. 30° betragen.

Durch den wendepunktfreien, stetigen Verlauf der Außenkontur im sich verbreiternden Abschnitt ist der Griffwinkel kontinuierlich bis zum Winkel α hin verstellbar und damit besonders gut an den Fahrer anpaßbar. Würde die Außenkontur des Griffstückes im sich verbreiternden Teilabschnitt Wendepunkte bzw. sogar Stufen besitzen, wäre der Griffwinkel nicht optimal an den Fahrer anpaßbar, da das Griffstück nicht in jeder Drehstellung gut umfaßt werden könnte. Es gäbe zwar einige Griffstellungen, die angenehm wären, das Griffstück würde jedoch den großen Vorteil verlieren, für nahezu alle Fahrer und Fahrradtypen geeignet zu sein.

Das Griffstück besteht aus derart unverformbaren Material, daß bei gebrauchsüblichen Stoßbelastungen der Griffwinkel im Wesentlichen konstant ist bzw. daß er sich während der Fahrt nicht verändert. Das Material braucht zwar nicht absolut inelastisch zu sein, es darf jedoch praktisch nicht federn - bzw. höchstens starken Stößen nachgeben- und soll eine klar definierte Kraftübertragung auf den Lenker ermöglichen.

Der Griff kann bevorzugt aus modernen Leichtkunststoffen bestehen und kommt damit dem Bedürfnis der Gewichtsreduzierung entgegen. Nahezu alle eingangs erläuterten Griffe mit zusätzlichen Federelementen sind für moderne Sporträder zu schwer und entsprechen auch nicht den modernen Designerfordernissen. Das Griffstück kann leicht gewechselt werden, da es bevorzugt einstückig ausgebildet ist. Das Design ist durch die exzentrische Ausbildung leicht modisch ausgestaltbar und dem "Oversizedlook" von Mountainbikes anpaßbar.

Bevorzugt erstreckt sich der exzentrische Bereich nur über einen Teil der axialen Länge des Griffstückes (Anspruch 2). Damit ist es möglich, das Griffstück mit den verschiedenen Fingern in verschiedenen Griffbereichen zu umfaßen und die Lage der Hand nach Wunsch zu verändern. Außerdem ist es aus ästhetischen und praktischen Gründen vorteilhaft, wenn sich das Griffstück nicht bis zum Ende der Lenkstange durchgehend verbreitert.

Hat der sich verbreiternde Abschnitt wenigstens an einer Stelle einen Winkel von wenigstens 20° zur Lenkstange, kann mit Hilfe des Griffstückes ein günstiger Griffwinkel für einen Großteil der handelsüblichen Lenker (mit z.B. um 10° abgebogenen Enden) eingestellt werden.

Wenn sich das Griffstück im Anschluß an den sich verbreiternden Abschnitt zum Ende der Lenkstange hin wieder verjüngt, kann eine besonders günstige - der Handrückenform der den Griff umfassenden Hand angepaßte - Griffstellung eingenommen werden. Dabei umschließen z.B. Zeige- und Mittelfinger den sich verbreiternden Abschnitt und Ringfinger und kleiner Finger den sich verjüngenden Abschnitt.

Erstreckt sich der exzentrische Bereich zu weit um die Bohrung, wird das Griffstück relativ breit. Daher hat das Griffstück besonders bevorzugt einen zur Bohrung konzentrischen Bereich (Anspruch 5), z.B. im Abstand von 5 mm zur Bohrung. Damit ist das Griffstück besonders handlich und zum sportlichen Fahren geeignet.

Bevorzugt kann das Griffstück auch die Außenkontur eines Kegelstumpfes haben, wobei die Bohrung zum Aufschieben des Griffstückes gegenüber der Mittelachse des Kegelstumpfes in einem Winkel angeordnet ist (Anspruch 6). Da die Bohrung gegenüber der Mittelachse des Kegelstumpfes in einem Winkel angeordnet ist, wirkt der Kegel bereits als Exzenter.

An den Kegelstumpf kann ein zusätzlicher exzentrischer Bereich angeformt sein (Anspruch 7), damit die Kegelöffnung z.B. bei Griffstücken für gerade Lenker nicht zu groß gewählt werden muß und der Griff nicht zu dick wird.

Diese Wirkung wird optimal dann erreicht, wenn die Bohrung zum Aufschieben des Griffstückes auf die Lenkstange parallel zu einer Seite der Mantelfläche des Kegelstumpfes verläuft (Anspruch 8).

Im folgenden wird die Erfindung anhand zweier Ausführungsbeispiele im Zusammenhang mit der Zeichnung ausführlicher erläutert. Es zeigt:
- Fig. 1: eine Ansicht des Griffstückes nach einem ersten Ausführungsbeispiel der Erfindung aus einer Blickrichtung senkrecht zur Längsachse der Bohrung;
- Fig. 2: eine Draufsicht auf das Griffstück nach einem ersten Ausführungsbeispiel der Erfindung;
- Fig. 3: einen Querschnitt durch die Linie B-B aus Fig. 2;
- Fig. 4: einen Schnitt längs der Linie A-A aus Fig. 1;
- Fig. 5A: einen Querschnitt durch die Linie C-C aus Fig. 2;
- Fig. 5B: einen Querschnitt durch die Linie D-D aus Fig. 2;
- Fig. 5C: einen Längsschnitt durch die Linie E-E aus Fig. 2;
- Fig. 6: eine Draufsicht auf das Griffstück nach einem weiteren Ausführungsbeispiel der Erfindung;

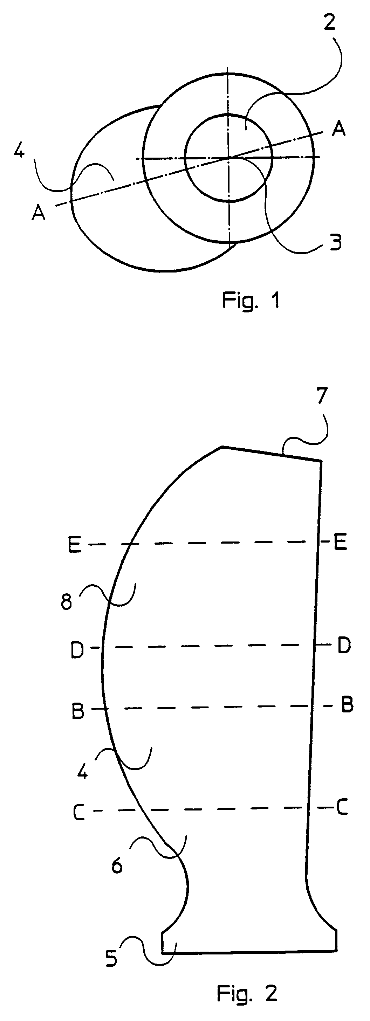

Zunächst sei das erste erfindungsgemäße Ausführungsbeispiel - ein Griffstück 1 für einen Fahrradlenker - der Figuren 1 bis 6 beschrieben. Die Figuren stellen das Griffstück 1 ungefähr im Maßstab 1/1 dar.

Nach Fig. 1 besitzt das Griffstück 1 eine Bohrung 2 mit einer Mittelachse 3. Das Griffstück 1 kann mit der Bohrung 2 auf die Enden eines (nicht abgebildeten) Fahrradlenkers aufgeschoben werden, so daß die Mittelachse 3 der Bohrung 2 mit der Mittelachse des Fahrradlenkers übereinstimmt. Weiterhin ist in Fig. 1 besonders gut ein zur Bohrung exzentrischer Abschnitt 4 zu erkennen, der sich an einen zur Bohrung 2 konzentrischen Anschlag 5 zum Anlegen der Hand anschließt.

Fig. 2 zeigt eine Draufsicht auf das erste Ausführungsbeispiel. Vom Anschlag 5 aus verbreitert sich der exzentrische Bereich 4 kontinuierlich zum Lenkerende hin (Teilabschnitt 6 des Bereiches 4) bis zu einem maximalen Durchmesser (Linie B-B). An den Teilabschnitt 6 schließt ein sich zum Griffstückende 7 hin verjüngender Teilabschnitt 8 an. Der exzentrische Bereich 4 besitzt aus dieser Sicht annähernd die Form eines Kreisabschnittes.

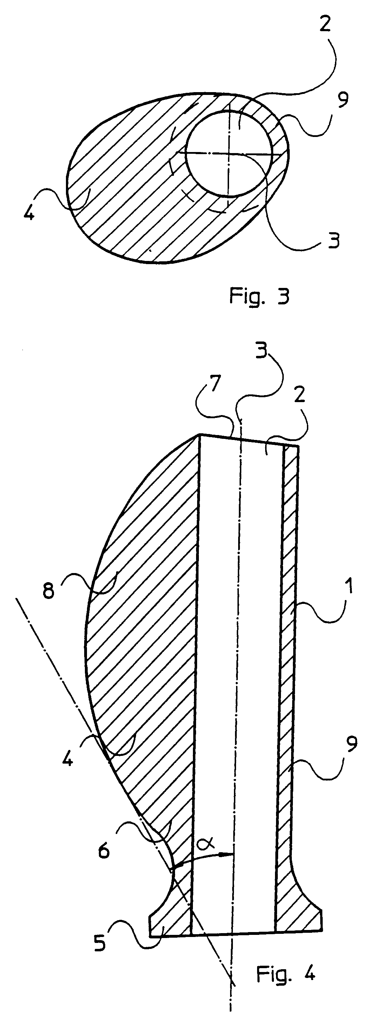

Durch die Stelle des größten Durchmessers (Linie B-B) geht die Schnittansicht der Fig. 3. Der exzentrische Abschnitt 4 ist in Fig. 3 durch einen gestrichelten Kreisbogenabschnitt gesondert erkennbar. Weiterhin befindet sich auf der dem exzentrischen Bereich 4 gegenüberliegenden Seite der Bohrung 2 ein zur Bohrung 2 konzentrischer Bereich 9. Dieser konzentrische Bereich 9 besitzt eine Stärke von z.B. 5mm.

Fig. 4 zeigt einen Schnitt durch die mittels der Linien A-A aus Fig. 1 und B-B aus Fig. 2 definierte Ebene. Der Schnitt verdeutlicht die starke Asymetrie des Griffstückes 1 im Bezug zur Lenkstange. Durch unterschiedliche Drehstellungen des Griffstückes 1 ist der Griffwinkel durch diese Asymmetrie bzw. durch die Exzenterwirkung individuell optimal einstellbar. Der exzentrische Bereich 4 besitzt dazu einen genügend großen Winkel α zur Lenkstange - hier z.B. ca. 35°. Der Winkel α bezieht sich dabei auf den ungefähren Durchschnittswinkel im Handauflagebereich des sich verbreiternden Abschnittes 6.

Der sich verjüngende Abschnitt 8 optimiert die Möglichkeiten des Griffstückes 1 weiter. Je nach individuellem Wunsch kann die Hand so um den Griff 1 gelegt werden, daß der Ring- und/oder der kleine Finger im sich verjüngenden Abschnitt liegen, was den Griffwinkel der Hand nicht verändert, aber einen festeren Griff zuläßt.

Ein besonderer Vorteil des ersten Ausführungsbeispielse liegt darin, daß es sehr gut für gerade Lenker von Mountainbikes geeignet ist. Gerade diese relativ neue Art des Extremradfahrens erhöht das Bedürfnis nach neuen, über den bisherigen Stand der Technik hinausgehenden Neuentwicklungen. Für weniger extreme Fahrtechniken ausgelegte Fahrradgriffe mit Federwirkung sind für Mountainbikes nicht geeignet. Insbesondere die Griffe mit integrierten Federn haben sich wegen ihrer Probleme auf dem Markt auch nicht durchgesetzt.

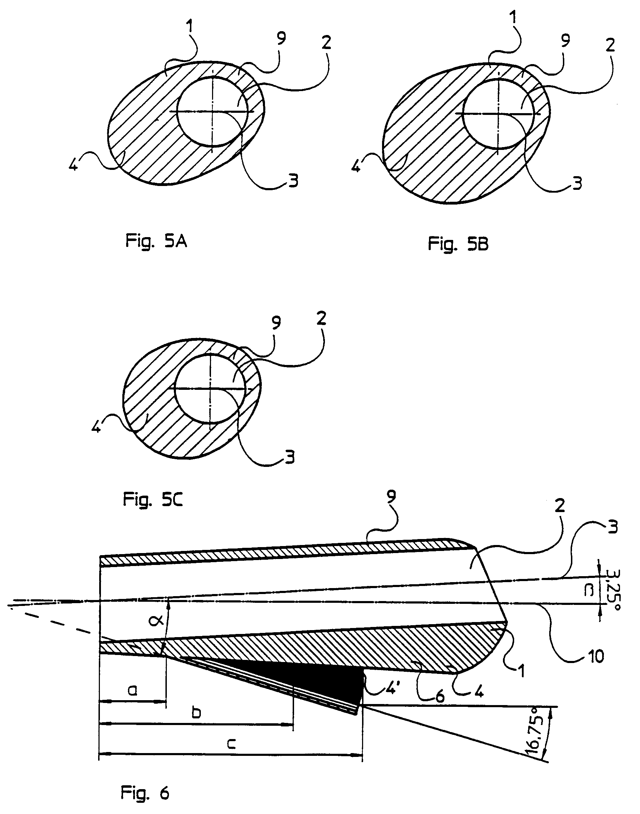

Die Fig. 5A bis 5C zeigen analog zur Fig.3 Querschnitte durch das erste Ausführungsbeispiel der Erfindung. Die verschiedenen Außenkonturen dieser Querschnitte verdeutlichen das kontinuierliche sich Verbreitern und das daran anschließende sich Verjüngen des Griffstückes. Außerdem wird gezeigt, daß die Außenkontur des Griffstückes wendepunktfrei und stetig ist, was ein kontinuierliches Verstellen des Griffwinkels ermöglicht.

Als Griffmaterial ist insbesondere ein leichter und fester Kunststoff oder Kunststoffschaum mit einer nur geringen Federwirkung geeignet. Der Griff soll kaum federn, damit das Handgelenk nicht nachteiligen und ermüdenden Drehbewegungen ausgesetzt ist. Der Griff kann zwar mit einer angenehm greifbaren weicheren Schicht umgeben werden. Diese Schicht soll jedoch so dünn sein, daß sie wenig federnd wirkt.

Fig 6 zeigt ein weiteres Ausführungsbeispiel der Erfindung. Das Griffstück 1 hat die Außenkonturen eines Kegelstumpfes. Die Bohrung 2 ist gegenüber der Mittelachse 10 des Kegelstumpfes in einem Winkel angeordnet. Vorzugsweise verläuft die Bohrung parallel zu einer Seite der Mantelfläche des Kegelstumpfes. Damit ist das Griffstück 1 im Bezug zur Bohrung 4 bereits exzentrisch.

Damit der Griff nicht zu dick wird und trotzdem noch die optimale Ausrichtung des Handgelenkes gewährleistet bleibt, ist vorgesehen, an einer Seite des Griffes einen zusätzlichen exzentrischen Körper 4' anzubringen, der sich nur über einen Teil der axialen Länge des Griffstückes erstreckt, so daß Zeige-, Mittel- und Ringfinger in dessen Bereich liegen, dagegen der kleine Finger stärker abgewinkelt werden kann.

Die Größenverhältnisse bei diesem weiteren Ausführungsbeispiel sollen nachfolgend beispielhaft veranschaulicht werden. Das Griffstück 1 kann z.B. aus einem Kegelstumpf mit einer Winkelöffnung von 3,5° bestehen. Zusätzlich kann die Bohrung 2 um 3,25° gegenüber der Kegelachse versetzt sein. Der zusätzliche exzentrische Bereich 4' kann um weitere 16,75° abgeknickt sein. Damit ergibt sich ein Gesamtwinkel von ca. 23,5°, was einem Griffwinkel von ca. 67° entspricht. Damit ist bei einem geraden Lenker ein Griffwinkel zwischen 90° und 67° (bzw. 57° bei um 10° abgebogenen Lenkerenden) einstellbar. Der Ansatz des zusätzlichen exzentrischen Bereiches 4' kann beispielsweise ca. 20 mm vom dem Lenkerende abgewandten Ende 7 des Griffstückes 1 entfernt sein (Strecke a). Der zusätzliche exzentrische Bereich 4' erstreckt sich ca. 60 mm weiter zum Ende 7 hin (Strecke c). Die halbe Grifflänge beträgt ungefähr 58 mm (Strecke b).

## Patentansprüche

1. Griffstück (1) für Lenkstangen, insbesondere von Fahrrädern, mit einer Bohrung (2) zum Aufschieben des Griffstücks auf die Lenkstange und einem zur Längsachse der Bohrung exzentrischen Bereich (4), der zumindest in einem Teilabschnitt (6) seiner Längserstreckung in seiner Exzentrizität zum Ende der Lenkstange hin zunimmt, wobei die Außenquerschnittskonturen des Griffstückes in diesem Teilabschnitt einen stetigen Verlauf haben,
dadurch gekennzeichnet,
daß die Außenquerschnittskonturen des Griffstückes (1) in dem Teilabschnitt (6) zunehmender Exzentrizität einen wendepunktfreien Verlauf haben,
daß durch Drehen des Griffstückes (1) um die Längsachse (3) der Bohrung (2) der Griffwinkel einstellbar ist, und
daß das Material des Griffstückes (1) in einem Maße unverformbar ist, das den Griffwinkel bei gebrauchsüblichen Stoßbelastungen im wesentlichen konstant hält.

2. Griffstück nach Anspruch 1, dadurch gekennzeichnet, daß sich der exzentrische Bereich (4) nur über einen Teil der axialen Länge des Griffstückes (1) erstreckt.

3. Griffstück nach Anspruch 1 oder 2, dadurch gekennzeichnet, daß der Teilabschnitt (6) zunehmender Exzentrizität wenigstens an einer Stelle einen Winkel (α) von wenigstens 20° zur Lenkstange aufweist.

4. Griffstück nach einem der Ansprüche 1 bis 3, dadurch gekennzeichnet, daß es im Anschluß an den Teilabschnitt (6) zunehmender Exzentrizität einen weiteren Teilabschnitt ( 8) mit zum Ende der Lenkstange hin wieder abnehmender Exzentrizität aufweist.

5. Griffstück nach einem der Ansprüche 1 bis 4, dadurch gekennzeichnet, daß auf der dem exzentrischen Bereich (4) gegenüberliegenden Seite der Bohrung (2) ein zur Bohrung (2) konzentrischer Bereich (9) ausgebildet ist.

6. Griffstück nach einem der Ansprüche 1, 3 oder 5, dadurch gekennzeichnet, daß es die Außenkontur eines Kegelstumpfes hat, wobei die Bohrung (2) zum Aufschieben des Griffstückes (1) gegenüber der Mittelachse (10) des Kegelstumpfes in einem Winkel (β) angeordnet ist.

7. Griffstück nach Anspruch 6, dadurch gekennzeichnet, daß an den Kegelstumpf ein zusätzlicher exzentrischer Bereich (4') angeformt ist.

8. Griffstück nach einem der Ansprüche 6 oder 7, dadurch gekennzeichnet, daß die Bohrung (2) zum Aufschieben des Griffstückes (1) auf die Lenkstange parallel zu einer Seite der Mantelfläche des Kegelstumpfes verläuft.

## Claims

1. A grip (1) for handlebars, especially of bicycles, with a drilled hole (2) for sliding the grip onto the handlebar and a region (4) eccentric of the longitudinal axis of the drilled hole which increases in its eccentricity towards the end of the handlebar, at least in a section (6) of the longitudinal extension thereof, wherein the outer cross-sectional (1) of the grip in the said section have a uniform shape, characterised in that the outer cross-sectional outlines of the grip (1) have a smoothly-extending shape in the section (6) of increasing eccentricity,
in that it is possible to adjust the grip angle by turning the grip (1) about the longitudinal axis (3) of the drilled hole (2),
and in that the material of the grip (1) is non-deformable to an extent which keeps the grip angle substantially fixed throughout the shock loading customary in use.

2. A grip according to Claim 1, characterised in that the eccentric region (4) only extends across a part of the axial length of the grip (1).

3. A grip according to Claim 1 or 2, characterised in that the section (6) of increasing eccentricity has an angle (α) of at least 20° with the handlebar in at least one position.

4. A grip according to any one of Claims 1 to 3, characterised in that it has another section (8), which has eccentricity diminishing again towards the end of the handlebar, attached to the section (6) of increasing eccentricity.

5. A grip according to any one of Claims 1 to 4, characterised in that a region (9) concentric with the drilled hole (2) is formed on the side of the drilled hole (2) opposite the eccentric region (4).

6. A grip according to any one of Claims 1, 3 or 5, characterised in that it has the outer outline of a frustum, wherein the drilled hole (2) for slipping on the grip (1) is arranged at an angle (β) in relation to the median axis (10) of the frustum.

7. A grip according to Claim 6, characterised in that an additional eccentric region (4') is formed on the frustum.

8. A grip according to Claim 6 or 7, characterised in that the drilled hole (2) for sliding the grip (1) onto the handlebar extends parallel to one side of the housing surface of the frustum.

## Revendications

1. Poignée (1) de guidon, notamment de bicyclettes munie d'un passage (2) pour enfiler la poignée sur la tige de guidon et une zone (4) excentrique par rapport à l'axe longitudinal du passage de la zone qui s'élargit sur un tronçon partiel (6) de sa longueur dans la direction excentrique jusqu'à l'extrémité du guidon, les contours de section extérieure de la poignée présentant dans ce tronçon partiel un profil constant, caractérisée en ce que les contours de section extérieure de la poignée (1) présentant dans le tronçon partiel (6) d'excentricité croissante un profil dépourvu de point d'inflexion, en ce que l'angle de préhension est réglable par rotation de la poignée (1) autour de l'axe longitudinal (3) du passage (2) et en ce que le matériau de la poignée (1) est indéformable jusqu'à un certain point de telle sorte que l'angle de préhension reste sensiblement constant sous les charges causées par les chocs au cours de l'utilisation habituelle.

2. Poignée selon la revendication 1, caractérisée en ce que la zone excentrique (4) s'étend seulement sur une partie de la longueur axiale de la poignée (1).

3. Poignée selon la revendication 1 ou 2, caractérisée en ce que le tronçon partiel (6) d'excentricité croissante présente au moins en un endroit un angle (α) d'au moins 20° par rapport à la tige de guidon.

4. Poignée selon l'une des revendications 1 à 3, caractérisée en ce qu'elle comporte en liaison avec le tronçon partiel (6) d'excentricité croissante un autre tronçon partiel (8) dont l'excentricité décroît à nouveau vers l'extrémité du guidon.

5. Poignée selon l'une des revendication 1 à 4, caractérisée en ce que du côté du passsage (2) opposé à la zone excentrique (4) est formée une zone (9) concentrique au passage (2).

6. Poignée selon l'une des revendications 1, 3 ou 5, caractérisée en ce qu'elle présente le contour extérieur d'un tronc de cône, le passage (2) étant disposé pour permettre l'engagement coulissant de la poignée (1) sous un angle (β) par rapport à l'axe médian (10) du tronc de cône.

7. Poignée selon la revendication 6, caractérisée en ce qu'une zone excentrique supplémentaire (4') est formée sur le tronc de cône.

8. Poignée selon l'une des revendications 6 ou 7, caractérisée en ce que le passage (2) pour engager la poignée (1) sur la tige de guidon court parallèlement à une face de la surface d'enveloppe du tronc de cône.
